# EUROPÄISCHE PATENTANMELDUNG

(11) **EP 2 143 608 A1**
(43) Veröffentlichungstag der Anmeldung: **13.01.2010**
(21) Anmeldenummer: 09164813.9
(22) Anmeldetag: 07.07.2009
(51) Int. Cl.: B60T 11/21, B62D 11/08

(54) **Lenkbremseinrichtung für ein Kraftfahrzeug**

(30) Priorität: 10.07.2008 DE 102008040326
(71) Anmelder: Deere & Company, Moline, IL 61265-8098 (US)
(72) Erfinder: Nordhoff, Hendrik, 48329, Havixbeck (DE)
(74) Vertreter: Dehnhardt, Florian Christopher

(57) **Zusammenfassung**

Die Erfindung betrifft eine Lenkbremseinrichtung (10) für ein Kraftfahrzeug, mit an gegenüberliegenden Fahrzeugseiten angeordneten Fahrzeugrädern, wobei jedem der Fahrzeugräder eine Radbremseinrichtung zugeordnet ist, die sich mittels eines Bremsbedienelements (16) fahrerseitig ansteuern lässt. Erfindungsgemäß wird zumindest eine der Radbremseinrichtungen (12i) bei Erkennung eines Wendemanövers des Kraftfahrzeugs unabhängig von einer Betätigung des Bremsbedienelements (16) zur Durchführung eines Lenkbremsvorgangs derart angesteuert, dass in Bezug auf eine gemeinsame Fahrzeugachse ein kurveninneres Fahrzeugrad mit einer gegenüber einem kurvenäußeren Fahrzeugrad höheren Bremskraft beaufschlagt wird.

## Beschreibung

Die Erfindung betrifft eine Lenkbremseinrichtung für ein Kraftfahrzeug, mit an gegenüberliegenden Fahrzeugseiten angeordneten Fahrzeugrädern, wobei jedem der Fahrzeugräder eine Radbremseinrichtung zugeordnet ist, die sich mittels eines Bremsbedienelements fahrerseitig ansteuern lässt. Des Weiteren betrifft die Erfindung ein mit einer derartigen Lenkbremseinrichtung ausgestattetes Kraftfahrzeug.

Die Verwendung von Lenkbremseinrichtungen ist vor allem im Nutzfahrzeugbereich, insbesondere bei landwirtschaftlichen Kraftfahrzeugen wie Traktoren oder dergleichen, verbreitet. Die Lenkbremseinrichtung erlaubt es, die Fahrtrichtung des Kraftfahrzeugs über die Wirkung einer herkömmlichen Achsschenkellenkung hinaus zu beeinflussen.

Das Prinzip der Lenkbremseinrichtung beruht auf einer Veränderung bzw. Verlagerung der Verteilung der Brems- bzw. Antriebskräfte zwischen den beiden Seiten des Kraftfahrzeugs. Die Verteilung der Brems- bzw. Antriebskräfte erfolgt derart, dass ein die jeweilige Lenkrichtung unterstützendes Giermoment in Richtung der Hochachse des Kraftfahrzeugs aufgebaut wird. Im einfachsten Fall wird zumindest eines der Fahrzeugräder auf einer Seite des Kraftfahrzeugs abgebremst, während die übrigen Fahrzeugräder ungebremst bleiben. Auf diese Weise lässt sich insbesondere eine Verringerung des Wendekreises bei der Durchführung eines Wendemanövers erzielen.

Eine derartige Lenkbremseinrichtung für ein Kraftfahrzeug ist aus der DE 27 50 851 A1 bekannt. Die Lenkbremseinrichtung ist Bestandteil einer hydraulischen Betriebsbremsanlage des Kraftfahrzeugs. Die hydraulische Betriebsbremsanlage umfasst mehrere hydraulische Radbremszylinder zur Abbremsung zugehöriger Fahrzeugräder, wobei die Radbremszylinder mittels eines Bremspedals fahrerseitig ansteuerbar sind. Zur Durchführung eines Lenkbremsvorgangs lassen sich die Radbremszylinder zumindest der Hinterräder des Kraftfahrzeugs für jede der beiden Seiten des Kraftfahrzeugs durch Betätigung zugehöriger Handhebel getrennt ansteuern. Da der Fahrer zur Bedienung der Lenkbremseinrichtung die beiden Handhebel von Hand betätigen muss, ist die Durchführung des Lenkbremsvorgangs vergleichsweise unkomfortabel.

Eine vergleichbare Lenkbremseinrichtung geht aus der DE 101 45 789 A1 hervor. Anstelle von Handhebeln sind getrennte Bremspedale zur Durchführung des Lenkbremsvorgangs vorgesehen, wobei sich die Bremspedale bei einer Straßenfahrt mechanisch miteinander verbinden lassen.

Die EP 275 985 A2 offenbart ferner eine Lenkbremsanlage für einen Schlepper. Die Versorgung der Bremsen mit Bremsflüssigkeit erfolgt mittels eines pedalbetätigten Geberzylinders, der über zwischengeschaltete elektrische Stelleinrichtungen wahlweise mit einem Bremszylinder eines rechten und/oder linken angetriebenen Fahrzeugrads verbindbar ist. Eine elektrische Schaltkontaktanordnung dient der Erkennung eines an lenkbaren Fahrzeugrädern vorliegenden Lenkeinschlags. Die elektrische Schaltkontaktanordnung wirkt derart mit den elektrischen Stelleinrichtungen zusammen, dass in Abhängigkeit des Lenkeinschlags entweder die rechte oder die linke Verbindung zwischen dem Geberzylinder und den Bremszylindern gesperrt wird. Die Durchführung des Lenkbremsvorgangs ist somit ausschließlich in solchen Fahrsituationen möglich, in denen zugleich eine Abbremsung des Schleppers durch fahrerseitige Betätigung des Bremszylinders erfolgt. Die Flexibilität der Lenkbremsanlage ist daher vergleichsweise eingeschränkt.

Es ist daher Aufgabe der vorliegenden Erfindung, eine Lenkbremseinrichtung der eingangs genannten Art derart weiterzubilden, dass diese eine komfortable und bezüglich ihrer Flexibilität verbesserte Durchführung eines Lenkbremsvorgangs in Zusammenhang mit einem Wendemanöver des Kraftfahrzeugs ermöglicht.

Diese Aufgabe wird gemäß den Merkmalen des Patentanspruchs 1 gelöst.

Die Lenkbremseinrichtung für ein Kraftfahrzeug umfasst an gegenüberliegenden Fahrzeugseiten angeordnete Fahrzeugräder, wobei jedem der Fahrzeugräder eine Radbremseinrichtung zugeordnet ist, die sich mittels eines Bremsbedienelements fahrerseitig ansteuern lässt. Erfindungsgemäß wird zumindest eine der Radbremseinrichtungen bei Erkennung eines Wendemanövers des Kraftfahrzeugs unabhängig von einer Betätigung des Bremsbedienelements zur Durchführung eines Lenkbremsvorgangs derart angesteuert, dass in Bezug auf eine gemeinsame Fahrzeugachse ein kurveninneres Fahrzeugrad mit einer gegenüber einem kurvenäußeren Fahrzeugrad höheren Bremskraft beaufschlagt wird. Hierdurch wird ein Giermoment in Richtung der Hochachse des Kraftfahrzeugs aufgebaut, das derart gerichtet ist, dass dieses eine Verringerung des bereits durchfahrenen bzw. noch zu durchfahrenden Wendekreises und damit eine Verbesserung des Wendeverhaltens des Kraftfahrzeugs zur Folge hat.

Die eigentliche Durchführung des Lenkbremsvorgangs erfolgt somit, ebenso wie auch die vorhergehende Erkennung des Wendemanövers, selbsttätig und - im Sinne einer größtmöglichen Flexibilität der Lenkbremseinrichtung - ohne Einschränkung auf eine bestimmte Fahrsituation.

Vorteilhafte Ausführungen der erfindungsgemäßen Lenkbremseinrichtung gehen aus den Unteransprüchen hervor. Vorzugsweise handelt es sich bei der Fahrzeugachse um eine angetriebene Hinterachse des Kraftfahrzeugs. Zusätzlich oder alternativ kann es sich jedoch auch um eine gelenkte Vorderachse handeln. Das Kraftfahrzeug kann insbesondere als Allradfahrzeug ausgebildet sein, sodass sowohl die Vorderachse als auch die Hinterachse mit einer Antriebseinrichtung des Kraftfahrzeugs in Verbindung steht. Die Antriebseinrichtung umfasst insbesondere einen Verbrennungsmotor sowie eine mit dem Verbrennungsmotor zusammenwirkende Kupplungs- bzw. Getriebeeinheit. Ein zwischen den angetriebenen Fahrzeugrädern der jeweiligen Fahrzeugachse angeordnetes Differentialgetriebe ermöglicht eine gezielte Verschiebung des Antriebsmoments zugunsten der kurveninneren Fahrzeugräder und damit eine zusätzliche Unterstützung des Lenkbremsvorgangs.

Die Radbremseinrichtungen können beispielsweise Bestandteil einer hydraulischen Betriebsbremsanlage des Kraftfahrzeugs sein, wobei die Radbremseinrichtungen durch Betätigung des mit einem hydraulischen Bremsventil bzw. Bremskraftverstärker in Verbindung stehenden Bremsbedienelements fahrerseitig ansteuerbar sind. Die Radbremseinrichtungen weisen eine fahrzeugfest angeordnete Bremszange bzw. Bremsbacke mit einem hydraulisch ansteuerbaren Bremskolben sowie eine mit dem jeweiligen Fahrzeugrad drehfest verbundene Bremsscheibe bzw. Bremstrommel auf.

Bei dem Bremsbedienelement kann es sich insbesondere um ein im Fußraum des Fahrers angeordnetes, bezüglich der Radbremseinrichtungen beider Fahrzeugseiten gemeinsam vorgesehenes Bremspedal handeln. Alternativ besteht jedoch auch die Möglichkeit, zur Ansteuerung der Radbremseinrichtungen für beide Fahrzeugseiten getrennte Bremspedale vorzusehen. Diese können zur Abbremsung des Kraftfahrzeugs mittels eines dem Bremsventil zugeordneten Verriegelungsmechanismus miteinander verbindbar sein.
Vorzugsweise ist die zumindest eine Radbremseinrichtung über eine eigene Hydraulikbremsleitung mit dem hydraulischen Bremsventil verbunden, sodass sich diese unabhängig von den übrigen Radbremseinrichtungen durch Beaufschlagung mit Bremsdruck ansteuern lässt.

Letzteres wird ermöglicht, indem die zumindest eine Radbremseinrichtung über ein hydraulisch steuerbares Druckregelventil mit einer Hydraulikversorgung des Kraftfahrzeugs verbindbar ist. Das Druckregelventil lässt sich hierbei entgegen einer rückstellenden Federkraft aus einer geöffneten in eine geschlossene Ventilstellung überführen. Die Hydraulikversorgung des Kraftfahrzeugs umfasst beispielsweise eine Druckmittelpumpe, insbesondere eine aus einem Hydraulikflüssigkeitsreservoir gespeiste Axialkolbenpumpe.

Um in diesem Fall einen unerwünschten Bremsdruckabbau in der zumindest einen Radbremseinrichtung aufgrund eines Abfließens von Hydraulikflüssigkeit in Richtung des Bremsventils zu verhindern, besteht die Möglichkeit, dass in der Hydraulikbremsleitung ein hydraulisch ansteuerbares Absperrventil angeordnet ist. Das Absperrventil lässt sich hierbei entgegen einer rückstellenden Federkraft aus einer geschlossenen in eine geöffnete Ventilstellung überführen.

Zusätzlich kann eine zu dem hydraulisch steuerbaren Absperrventil parallel geschaltete Anordnung, bestehend aus einem Drosselventil und/oder einem in Richtung der zumindest einen Radbremseinrichtung durchlässigen Einwegventil, vorgesehen sein. Das Drosselventil erlaubt ein kontrolliertes Abfließen von Hydraulikflüssigkeit in Richtung des Bremsventils, sodass dem Aufbau eines Überdrucks in der zumindest einen Radbremseinrichtung bei geöffnetem Absperrventil entgegengewirkt werden kann. Das insbesondere als federkraftbetätigtes Rückschlagventil ausgebildete Einwegventil stellt sicher, dass sich die zumindest eine Radbremseinrichtung auch bei geöffnetem Absperrventil durch Betätigung des Bremsbedienelements bzw. des damit zusammenwirkenden Bremsventils gemeinsam mit den übrigen Radbremseinrichtungen ansteuern lässt und das Kraftfahrzeug während der Durchführung des Lenkbremsvorgangs jederzeit zum Stillstand gebracht werden kann.

Zur Erkennung eines vom Fahrer eingeleiteten Wendemanövers besteht die Möglichkeit, die Betätigungscharakteristik eines Lenkbedienelements, das zur fahrerseitigen Betätigung lenkbarer Fahrzeugräder vorgesehen ist, auszuwerten. Die Erkennung des Wendemanövers kann entweder durch Auswertung von mit der Betätigungscharakteristik des Lenkbedienelements in unmittelbarem Zusammenhang stehenden Größen, beispielsweise einer an dem Lenkbedienelement hervorgerufenen Auslenkung oder Betätigungskraft, erfolgen, oder aber durch Auswertung von mit der Betätigungscharakteristik des Lenkbedienelements in mittelbarem Zusammenhang stehenden Größen, beispielsweise eines an den lenkbaren Fahrzeugrädern eingestellten Lenkwinkels oder eines an einem Lenkventil bzw. Lenkkraftverstärker anliegenden Steuerdrucks zur Ansteuerung eines hydraulischen Lenkzylinders.

Bei dem Lenkbedienelement handelt es sich beispielsweise um ein herkömmliches Lenkrad. Es ist aber auch vorstellbar, ein kombiniertes Lenk- und Bremsbedienelement in Gestalt eines Steuerknüppels oder dergleichen vorzusehen.

Die lenkbaren Fahrzeugräder können einer Vorderachse und/oder Hinterachse des Kraftfahrzeugs zugeordnet sein, wobei die Lenkung beispielsweise als herkömmliche Achsschenkellenkung ausgebildet ist. Es ist jedoch auch denkbar, dass zur Lenkung des Kraftfahrzeugs ein hydraulisch steuerbares Knickgelenk zwischen einem vorderen und hinteren Fahrzeugteil vorgesehen ist.

Auf ein Wendemanöver kann unter anderem dann geschlossen werden, wenn eine auf einen maximalen Lenkeinschlag der lenkbaren Fahrzeugräder hinweisende Betätigung des Lenkbedienelements vorliegt. Im Falle eines als Lenkrad ausgebildeten Lenkbedienelements ist dies typischerweise dann der Fall, wenn das Lenkrad einen Lenkeinschlag entsprechend einem seiner beiden Endanschläge aufweist.

Vorzugsweise ist ein zur fremdkraftgestützten Betätigung der lenkbaren Fahrzeugräder ausgebildetes hydraulisches Lenkventil vorgesehen, das beispielsweise als Orbitrol ausgebildet ist und das über zugehörige Hydrauliksteuerleitungen mit einem mit den lenkbaren Fahrzeugrädern zusammenwirkenden hydraulischen Lenkzylinder in Verbindung steht. Insbesondere sind zur gegenläufigen Ansteuerung des Lenkzylinders insgesamt zwei Hydrauliksteuerleitungen vorgesehen, wobei je nach Lenkrichtung entweder in der einen oder der anderen ein in Richtung des maximalen Lenkeinschlags der lenkbaren Fahrzeugräder zunehmender Steuerdruck aufgebaut wird. Somit stehen die jeweils in den Hydrauliksteuerleitungen vorliegenden Druckverhältnisse in eindeutigem Zusammenhang mit der Richtung und dem Betrag des an den lenkbaren Fahrzeugrädern vorliegenden Lenkeinschlags.

Der an dem Lenkventil anstehende Steuerdruck liefert daher einen verlässlichen Hinweis auf das Vorliegen eines Wendemanövers, kann also unmittelbar zur Auslösung des Lenkbremsvorgangs herangezogen werden. Hierzu weist das Absperrventil und/oder das Druckregelventil einen mit einer der beiden Hydrauliksteuerleitungen verbundenen Steuereingang auf, wobei eine Betätigung des Absperrventils und/oder das Druckregelventils dann erfolgt, wenn der an dem Lenkventil anliegende Steuerdruck einen vorgegebenen Schwellenwert übersteigt. Der Schwellenwert wird vorzugsweise derart vorgegeben, dass dieser im Wesentlichen dem im Falle des maximalen Lenkeinschlags der lenkbaren Fahrzeugräder anstehenden Steuerdruck entspricht.

Übersteigt der Steuerdruck den vorgegebenen Schwellenwert, so nimmt das Absperrventil seine geöffnete und das Druckregelventil seine geschlossene Ventilstellung ein. Hierdurch wird einerseits die Verbindung zwischen der zumindest einen Radbremseinrichtung und dem Bremsventil unterbrochen, andererseits aber wird die zumindest eine Radbremseinrichtung mit der Hydraulikversorgung des Kraftfahrzeugs derart verbunden, dass der an dem Druckregelventil eingangsseitig anliegende und von der Hydraulikversorgung des Kraftfahrzeugs bereitgestellte Druck auf einen im Wesentlichen konstanten, zur Durchführung des Lenkbremsvorgangs geeigneten Bremsdruck eingeregelt wird.

Um eine vom Fahrer unerwünschte Durchführung des Lenkbremsvorgangs zu vermeiden, besteht die Möglichkeit, dass ein Absperrventil zwischen der Hydraulikversorgung des Kraftfahrzeugs und dem Druckregelventil angeordnet ist. Die Betätigung des Absperrventils erfolgt hierbei mittels eines im Kraftfahrzeug angeordneten Bedienelements.

Bei dem Kraftfahrzeug kann es sich um ein zweispuriges landwirtschaftliches Nutzfahrzeug, beispielsweise um einen Traktor oder dergleichen, handeln. Es ist jedoch auch eine Verwendung der erfindungsgemäßen Lenkbremseinrichtung in Zusammenhang mit beliebigen anderen Kraftfahrzeugen, beispielsweise Baumaschinen oder dergleichen, möglich.

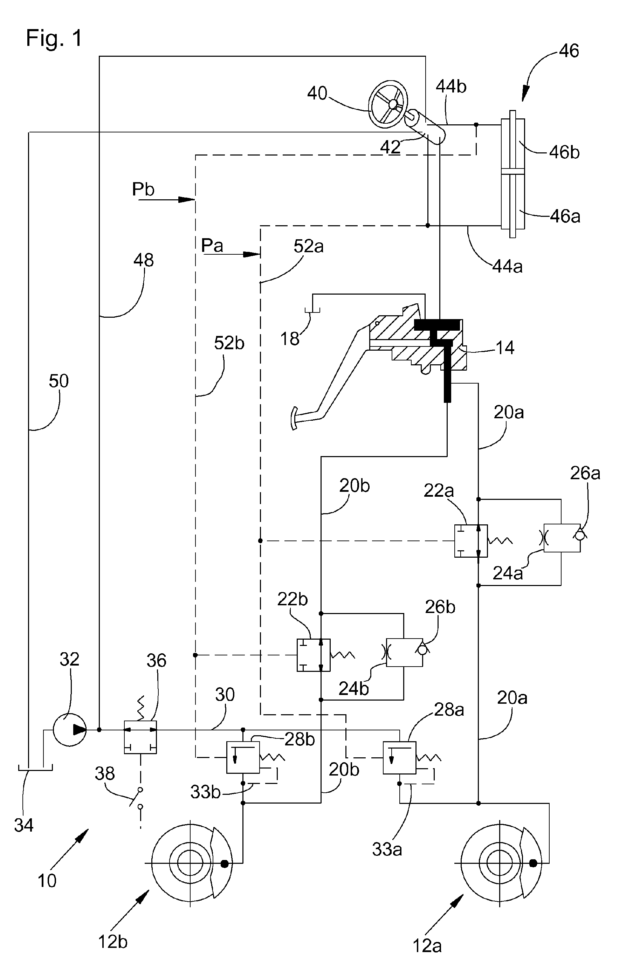

Die erfindungsgemäße Lenkbremseinrichtung wird im Folgenden anhand der beigefügten Zeichnung näher erläutert. Dabei zeigt die einzige Figur ein schematisch dargestelltes Ausführungsbeispiel der erfindungsgemäßen Lenkbremseinrichtung für ein nicht dargestelltes Kraftfahrzeug.

Bei dem Kraftfahrzeug handelt es sich um ein zweispuriges landwirtschaftliches Nutzfahrzeug, beispielsweise um einen Traktor oder dergleichen. Das Kraftfahrzeug weist eine gelenkte Vorderachse sowie eine angetriebene Hinterachse auf. Jede der beiden Fahrzeugachsen umfasst an gegenüberliegenden Fahrzeugseiten angeordnete Fahrzeugräder, die sich mittels zugehöriger Radbremseinrichtungen abbremsen lassen. Die Radbremseinrichtungen sind von konventioneller Bauart und weisen eine fahrzeugfest angeordnete Bremszange mit einem hydraulisch ansteuerbaren Bremskolben sowie eine mit dem jeweiligen Fahrzeugrad drehfest verbundene Bremsscheibe auf.

In Zusammenhang mit der erfindungsgemäßen Lenkbremseinrichtung 10 sind ausschließlich die beiden Radbremseinrichtungen 12i der angetriebenen Hinterachse des Kraftfahrzeugs dargestellt. Der Index i gibt hierbei die betreffende Fahrzeugseite wieder, der die jeweilige Radbremseinrichtung 12i zugeordnet ist, wobei der Index "a" in Fahrtrichtung des Kraftfahrzeugs gesehen dessen rechte Fahrzeugseite und der Index "b" in Fahrtrichtung des Kraftfahrzeugs gesehen dessen linke Fahrzeugseite bezeichnet.

Die Radbremseinrichtungen 12i sind Bestandteil einer hydraulischen Betriebsbremsanlage des Kraftfahrzeugs. Die Radbremsmeinrichtungen 12i sind - ebenso wie auch die übrigen Radbremseinrichtungen des Kraftfahrzeugs - durch Betätigung eines mit einem hydraulischen Bremsventil 14 in Verbindung stehenden Bremsbedienelements 16 fahrerseitig ansteuerbar. Das Bremsventil 14 hat zugleich die Funktion eines Bremskraftverstärkers, wobei letzterer aus einem Bremsflüssigkeitsreservoir 18 des Kraftfahrzeugs gespeist wird.

Bei dem Bremsbedienelement 16 handelt es sich beispielsgemäß um ein im Fußraum des Fahrers angeordnetes, bezüglich der Radbremseinrichtungen 12i beider Fahrzeugseiten gemeinsam vorgesehenes Bremspedal.

Die Radbremseinrichtungen 12i sind jeweils über eigene Hydraulikbremsleitungen 20i mit dem hydraulischen Bremsventil 14 verbunden. Zur Unterbrechung der Verbindung zwischen den Radbremseinrichtungen 12i und dem Bremsventil 14 sind in den Hydraulikbremsleitungen 20i hydraulisch ansteuerbare Absperrventile 22i angeordnet, die sich entgegen einer rückstellenden Federkraft aus einer geschlossenen in eine geöffnete Ventilstellung überführen lassen.

Zusätzlich ist eine den hydraulisch steuerbaren Absperrventilen 22i jeweils parallel geschaltete Anordnung, bestehend aus einem Drosselventil 24i und/oder einem in Richtung der Radbremseinrichtung 12i durchlässigen Einwegventil 26i, vorgesehen. Das Drosselventil 24i erlaubt ein kontrolliertes Abfließen von Hydraulikflüssigkeit in Richtung des Bremsventils 14, sodass dem Aufbau eines Überdrucks in der Radbremseinrichtung 12i bei geschlossenem Absperrventil 22i entgegengewirkt werden kann. Das als federkraftbetätigtes Rückschlagventil ausgebildete Einwegventil 26i stellt sicher, dass sich die Radbremseinrichtung 12i auch bei geschlossenem Absperrventil 22i durch Betätigung des Bremsbedienelements 16 bzw. des damit zusammenwirkenden Bremsventils 14 gemeinsam mit den übrigen Radbremseinrichtungen des Kraftfahrzeugs ansteuern lässt.

Zur fahrerunabhängigen Ansteuerung der Radbremseinrichtungen 12i sind diese mittels hydraulisch steuerbarer Druckregelventile 28i über eine Hydraulikleitung 30 mit einer Hydraulikversorgung 32 des Kraftfahrzeugs verbindbar, wobei sich die Druckregelventile 28i entgegen einer rückstellenden Federkraft aus einer geöffneten in eine geschlossene Ventilstellung überführen lassen.

Die Hydraulikversorgung 32 des Kraftfahrzeugs umfasst eine Druckmittelpumpe, insbesondere eine aus einem Hydraulikflüssigkeitsreservoir 34 gespeiste Axialkolbenpumpe, die hochdruckseitig Hydraulikflüssigkeit mit einem Druck in der Größenordnung von 30 bar zur Verfügung stellt.

Ein zwischen der Hydraulikversorgung 32 und den Druckregelventilen 28i angeordnetes elektrisch steuerbares Absperrventil 36 ermöglicht eine Unterbrechung einer über die Hydraulikleitung 30 hergestellten Verbindung. Die Betätigung des Absperrventils 36 erfolgt mittels eines im Kraftfahrzeug angeordneten Bedienelements 38, beispielsweise eines Kippschalters oder dergleichen.

Des Weiteren ist ein zur fahrerseitigen Betätigung lenkbarer Fahrzeugräder vorgesehenes Lenkbedienelement 40 vorhanden. Bei dem Lenkbedienelement 40 handelt es sich beispielsgemäß um ein herkömmliches Lenkrad. Die lenkbaren Fahrzeugräder sind hierbei der Vorderachse des Kraftfahrzeugs zugeordnet.

Das Lenkbedienelement 40 dient der Ansteuerung eines zur fremdkraftgestützten Betätigung der lenkbaren Fahrzeugräder ausgebildeten hydraulischen Lenkventils 42. Das Lenkventil 42 ist im vorliegenden Fall als Orbitrol ausgebildet, das über zugehörige Hydrauliksteuerleitungen 44i mit einem mit den lenkbaren Fahrzeugrädern zusammenwirkenden hydraulischen Lenkzylinder 46 in Verbindung steht. Hierbei sind zur gegenläufigen Ansteuerung des Lenkzylinders 46 insgesamt zwei Hydrauliksteuerleitungen 44i vorgesehen, die mit entsprechenden Kolbenräumen 46i des Lenkzylinders 46 verbunden sind, wobei je nach Lenkrichtung entweder in der einen oder der anderen Hydrauliksteuerleitung 44i ein in Richtung des maximalen Lenkeinschlags der lenkbaren Fahrzeugräder zunehmender Steuerdruck pᵢ aufgebaut wird.

Genauer gesagt wird das Lenkventil 42 über eine Zuführleitung 48 von Seiten der Hydraulikversorgung 32 mit Hydraulikflüssigkeit aus dem Hydraulikflüssigkeitsreservoir 34 beaufschlagt. Befindet sich das Lenkbedienelement 40 in seiner Neutralstellung - entsprechend einer Geradeausfahrt des Kraftfahrzeugs - fließt die Hydraulikflüssigkeit durch das Lenkventil 42 hindurch und über eine Rückführleitung 50 zurück in das Hydraulikflüssigkeitsreservoir 34.

Wird das Lenkbedienelement 40 aus seiner Neutralstellung heraus nach rechts bzw. links ausgelenkt, fließt eine zur Auslenkung des Lenkbedienelements 40 proportionale Hydraulikflüssigkeitsmenge durch das Lenkventil 42 hindurch und über die entsprechende Hydrauliksteuerleitung 44a bzw. 44b in den zugehörigen Kolbenraum 46a bzw. 46b des Lenkzylinders 46. Die dabei im gegenüberliegenden Kolbenraum 46b bzw. 46a verdrängte Hydraulikflüssigkeitsmenge wird über die entsprechende Hydrauliksteuerleitung 44b bzw. 44a sowie das mit dieser in Verbindung stehende Lenkventil 42 in Richtung des Hydraulikflüssigkeitsreservoirs 34 abgeführt.

Zur Erkennung eines vom Fahrer eingeleiteten Wendemanövers sowie zur Durchführung eines selbsttätigen Lenkbremsvorgangs weist das Absperrventil 22i und/oder das Druckregelventil 28i einen mit der Hydrauliksteuerleitung 44i über eine zugehörige Pilotleitung 52i verbundenen Steuereingang auf, wobei eine Betätigung des Absperrventils 22i und/oder des Druckregelventils 28i dann erfolgt, wenn der an dem Lenkventil 42 anliegende Steuerdruck pᵢ einen vorgegebenen Schwellenwert p_{ref} übersteigt. Der Schwellenwert p_{ref} wird derart vorgegeben, dass dieser dem im Falle des maximalen Lenkeinschlags der lenkbaren Fahrzeugräder auftretenden Steuerdruck pᵢ entspricht. Letzterer liegt typischerweise in der Größenordnung von 180 bar. Dementsprechend wird der Schwellenwert p_{ref} in der Größenordnung von 160 bar vorgegeben.

Übersteigt der Steuerdruck pᵢ den vorgegebenen Schwellenwert p_{ref}, so nimmt das Absperrventil 22i seine geöffnete und das Druckregelventil 28i seine geschlossene Ventilstellung ein. Hierdurch wird einerseits die Verbindung zwischen der Radbremseinrichtung 12i und dem Bremsventil 14 unterbrochen, andererseits aber wird die Radbremseinrichtung 12i mit der Hydraulikversorgung 32 des Kraftfahrzeugs derart verbunden, dass der am Druckregelventil 28i eingangsseitig anliegende und von der Hydraulikversorgung 32 des Kraftfahrzeugs bereitgestellte Druck auf einen im Wesentlichen konstanten, zur Durchführung des Lenkbremsvorgangs geeigneten Bremsdruck in der Größenordnung von 20 bar eingeregelt wird. Die Einregelung des Bremsdrucks erfolgt hierbei mittels einer am Druckregelventil 28i ausgangsseitig angeordneten Sensorleitung 33i.
Befindet sich das Bremsbedienelement 16 in unbetätigtem Zustand, so wird demzufolge das der Radbremseinrichtung 12i zugeordnete Fahrzeugrad abgebremst, während die übrigen Fahrzeugräder ungebremst bleiben. Hierdurch wird ein Giermoment in Richtung der Hochachse des Kraftfahrzeugs aufgebaut, das derart gerichtet ist, dass dieses eine Verringerung eines bereits durchfahrenen bzw. noch zu durchfahrenden Wendekreises und damit eine Verbesserung des Wendeverhaltens des Kraftfahrzeugs zur Folge hat.

Unterschreitet der Steuerdruck pᵢ den vorgegebenen Schwellenwert p_{ref}, so wird auf das Ende des Wendemanövers geschlossen. Das Absperrventil 22i bzw. das Druckregelventil 28i kehrt in diesem Fall in seine durch die jeweilige rückstellende Federkraft gegebene Ventilstellung zurück.

Mit anderen Worten wird die Radbremseinrichtung 12i bei Erkennung eines Wendemanövers des Kraftfahrzeugs unabhängig von einer Betätigung des Bremsbedienelements 16 derart angesteuert, dass an der Hinterachse des Kraftfahrzeugs ein kurveninneres Fahrzeugrad mit einer gegenüber einem kurvenäußeren Fahrzeugrad höheren Bremskraft beaufschlagt wird.

Im Falle eines entlang einer Rechtskurve erfolgenden Wendemanövers wird somit die der rechten Fahrzeugseite zugeordnete Radbremseinrichtung 12a angesteuert. Umgekehrt wird im Falle eines entlang einer Linkskurve erfolgenden Wendemanövers die der linken Fahrzeugseite zugeordnete Radbremseinrichtung 12b angesteuert. Es sei jedoch angemerkt, dass grundsätzlich auch eine kombinierte Ansteuerung beider Radbremseinrichtungen 12a und 12b vorstellbar ist, bei der eine von der Richtung des Wendemanövers abhängige asymmetrische Beaufschlagung mit Bremsdruck im obigen Sinne erfolgt.

## Patentansprüche

1. Lenkbremseinrichtung für ein Kraftfahrzeug, mit an gegenüberliegenden Fahrzeugseiten angeordneten Fahrzeugrädern,
wobei jedem der Fahrzeugräder eine Radbremseinrichtung zugeordnet ist, die sich mittels eines Bremsbedienelements (16) fahrerseitig ansteuern lässt, **dadurch gekennzeichnet, dass** zumindest eine der Radbremseinrichtungen (12i) bei Erkennung eines Wendemanövers des Kraftfahrzeugs unabhängig von einer Betätigung des Bremsbedienelements (16) zur Durchführung eines Lenkbremsvorgangs derart angesteuert wird, dass in Bezug auf eine gemeinsame Fahrzeugachse ein kurveninneres Fahrzeugrad mit einer gegenüber einem kurvenäußeren Fahrzeugrad höheren Bremskraft beaufschlagt wird.

2. Lenkbremseinrichtung nach Anspruch 1, **dadurch gekennzeichnet, dass** es sich bei der Fahrzeugachse um eine angetriebene Hinterachse und/oder Vorderachse des Kraftfahrzeugs handelt.

3. Lenkbremseinrichtung nach Anspruch 1 oder 2, **dadurch gekennzeichnet, dass** die Radbremseinrichtungen Bestandteil einer hydraulischen Betriebsbremsanlage des Kraftfahrzeugs sind, wobei die Radbremseinrichtungen durch Betätigung des mit einem hydraulischen Bremsventil (14) in Verbindung stehenden Bremsbedienelements (16) fahrerseitig ansteuerbar sind.

4. Lenkbremseinrichtung nach einem der Ansprüche 1 bis 3, **dadurch gekennzeichnet, dass** die zumindest eine Radbremseinrichtung (12i) über eine eigene Hydraulikbremsleitung (20i) mit dem hydraulischen Bremsventil (14) verbunden ist.

5. Lenkbremseinrichtung nach einem der Ansprüche 1 bis 4, **dadurch gekennzeichnet, dass** die zumindest eine Radbremseinrichtung (12i) jeweils über ein Druckregelventil (28i) mit einer Hydraulikversorgung (32) des Kraftfahrzeugs verbindbar ist.

6. Lenkbremseinrichtung nach einem der Ansprüche 1 bis 5, **dadurch gekennzeichnet, dass** in der Hydraulikbremsleitung (20i) ein Absperrventil (22i) angeordnet ist.

7. Lenkbremseinrichtung nach einem der Ansprüche 1 bis 6, **dadurch gekennzeichnet, dass** eine zu dem Absperrventil (22i) parallel geschaltete Anordnung, bestehend aus einem Drosselventil (24i) und/oder einem in Richtung der zumindest einen Radbremseinrichtung (12i) durchlässigen Einwegventil (26i), vorgesehen ist.

8. Lenkbremseinrichtung nach einem der Ansprüche 1 bis 7, **dadurch gekennzeichnet, dass** das Absperrventil (22i) und/oder das Drosselventil (28i) hydraulisch betätigbar ist.

9. Lenkbremseinrichtung nach einem der Ansprüche 1 bis 8, **dadurch gekennzeichnet, dass** die Hydraulikversorgung (32) eine Druckmittelpumpe, insbesondere eine aus einem Hydraulikflüssigkeitsreservoir (34) gespeiste Axialkolbenpumpe, umfasst.

10. Lenkbremseinrichtung nach einem der Ansprüche 1 bis 9, **dadurch gekennzeichnet, dass** zur Erkennung eines Wendemanövers die Betätigungscharakteristik eines zur fahrerseitigen Ansteuerung lenkbarer Fahrzeugräder vorgesehenen Lenkbedienelements (40) ausgewertet wird.

11. Lenkbremseinrichtung nach einem der Ansprüche 1 bis 10,
**dadurch gekennzeichnet, dass** auf das Vorliegen eines Wendemanövers geschlossen wird, wenn eine auf einen maximalen Lenkeinschlag der lenkbaren Fahrzeugräder hinweisende Betätigung des Lenkbedienelements (40) vorliegt.

12. Lenkbremseinrichtung nach einem der Ansprüche 1 bis 11,
**dadurch gekennzeichnet, dass** ein zur fremdkraftgestützten Betätigung der lenkbaren Fahrzeugräder ausgebildetes hydraulisches Lenkventil (42) vorgesehen ist, wobei auf das Vorliegen eines Wendemanövers geschlossen wird, wenn ein an dem Lenkventil (42) anliegender Steuerdruck (pᵢ) einen vorgegebenen Schwellenwert (p_{ref}) übersteigt.

13. Lenkbremseinrichtung nach einem der Ansprüche 1 bis 12,
**dadurch gekennzeichnet, dass** das Druckregelventil (28i) und/oder das Absperrventil (22i) einen mit dem Lenkventil (42) verbundenen Steuereingang aufweist, wobei das Druckregelventil (28i) und/oder das Absperrventil (28i) zur Durchführung des Lenkbremsvorgangs betätigt wird, wenn der an dem Lenkventil (42) anliegende Steuerdruck (pᵢ) den vorgegebenen Schwellenwert (p_{ref}) übersteigt.

14. Lenkbremseinrichtung nach einem der Ansprüche 1 bis 13,
**dadurch gekennzeichnet, dass** ein fahrerseitig betätigbares Absperrventil (36) zwischen der Hydraulikversorgung (32) und der zumindest einen Radbremseinrichtung (12i) des Kraftfahrzeugs angeordnet ist.

15. Kraftfahrzeug, insbesondere landwirtschaftliches Nutzfahrzeug, mit einer Lenkbremseinrichtung nach einem der Ansprüche 1 bis 14.
